# EUROPÄISCHE PATENTSCHRIFT

(11) **EP 0 629 069 B1**
(45) Veröffentlichungstag und Bekanntmachung des Hinweises auf die Patenterteilung: **30.09.1998**
(21) Anmeldenummer: 94106869.4
(22) Anmeldetag: 03.05.1994
(51) Int. Cl.: H04L 27/34

(54) **Multiträger-Übertragungsverfahren**
Multi-carrier transmission method
Procédé de transmission à porteuses multiples

(30) Priorität: 04.06.1993 DE 4318547
(43) Veröffentlichungstag der Anmeldung: 14.12.1994
(73) Patentinhaber: Rohde & Schwarz GmbH & Co. KG, D-81671 München (DE)
(72) Erfinder: Dambacher, Paul, Dipl.-Ing., D-84539 Ampfing (DE)
(74) Vertreter: Graf, Walter, Dipl.-Ing.

(56) Entgegenhaltungen:
- EP-A- 0 145 330
- EP-A- 0 373 277
- US-A- 3 805 191
- IEEE TRANSACTIONS ON COMMUNICATIONS, Bd.22, Nr.2, Februar 1974, NEW YORK, US Seiten 168 - 179 THOMAS C. M. ET AL.: 'Digital Amplitude-Phase Keying with M-ary Alphabets'
- IEEE INTERNATIONAL CONFERENCE ON COMMUNICATIONS - ICC'90, 15-19 APRIL 1990, ATLANTA, GA, US, Bd.4 Seiten 1517 - 1521, XP146044 RAMSEIER S. 'Bandwidth-Efficient Trellis Coded Modulation Schemes'
- TRANSACTIONS OF THE INSTITUTE OF ELECTRONICS, INFORMATION AND COMMUNICATION ENGINEERS OF JAPAN, Bd.E72, Nr.5, Mai 1989, TOKYO, JP Seiten 633 - 639, XP36079 NAKAMURA H. ET AL.: 'Power Efficient High-Level Modulation for High-Capacity Digital Radio Systems'

## Beschreibung

Die Erfindung betrifft und geht aus von einem Multiträger-Übertragungsverfahren laut Oberbegriff des Patentanspruches.

Multiträger-Übertragungsverfahren, bei denen eine Vielzahl von einzelnen nebeneinanderliegenden Trägern benutzt wird, sind bekannt. Ein solches Verfahren wird beispielsweise beim DAB-Hörfunk-System (Digital-Audio-Broadcasting, beschrieben in ITU, COM'89, Genf, Oktober 1989 bzw. "Künftige Systeme der digitalen Hörfunkübertragung", Bayerischer Rundfunk, November 1990) mit 1536 einzelnen Trägern pro übertragenem Signalpaket benutzt. Dabei ist es auch schon bekannt, für die Modulation der einzelnen Träger ein höherwertiges Modulationsverfahren mit mehreren Amplituden- und Phasenzuständen zu benutzen, beispielsweise eine 8PSK (Phase-Shift-Keying mit 8 Phasenzuständen)- oder eine 16QAM (Quadratur-Amplituden-Modulation mit 16 Amplitudenzuständen)-Modulation (beschrieben in Mäusl, "Digitale Modulationsverfahren", Hüthig-Verlag, S. 230-244 bzw. Meinke-Gundlach, Taschenbuch der Hochfrequenztechnik, 5. Auflage, S. O 19 bis O 24).

Solche Multiträger-Übertragungsverfahren besitzen den Vorteil, daß sehr frequenzökonomische Gleichwellennetze realisierbar sind und daß sie auch für den mobilen Empfang geeignet sind, bei Einsatz von höherwertigen Modulationsverfahren sind sie außerdem zur Übertragung von hohen Datenraten bis zu ca. 35 Mbit/s und damit für künftige DTVB-T (Digitale-Television-Broadcasting-Terrestrial)-Systeme geeignet.

Nachteilig ist bei solchen Multiträger-Übertragungsverfahren, daß hierbei Signale mit hohem Crestfaktor (Verhältnis von Spitzenwert zu Mittelwert) entstehen, also Signale, die mit weißem Rauschen vergleichbar sind. Daher sind zur Übertragung überdimensionierte Senderverstärker mit entsprechend geringem Wirkungsgrad erforderlich, die relativ hohe Investitions-, Energie- und Servicekosten bedingen. Die endliche Linearität und Aussteuerbarkeit der Verstärker führt außerdem zu Intermodulationsprodukten und damit zu Störungen benachbarter Übertragungsdienste, außerdem zu Inbandstörungen, durch welche die Fehlerrate vergrößert und die Übertragungsqualität verschlechtert wird.

Es ist auch schon bekannt, zur Übertragung von digitalen Daten über einen einzigen Träger (Mono-Sinusträger) die Lage der einzelnen Amplituden- und Phasenzustände im Vektordiagramm sowohl bezüglich Phase als auch bezüglich Amplitude nach ausgewählten Optimierungskriterien der Modulation beliebig frei zu wählen, beispielsweise so, daß die mittlere Senderleistung bei gleichen Entscheidungskreisen auf ein Minimum reduziert wird bzw. die Größe der Entscheidungskreise bei gleichem umfassenden Kreis (Aussteuerung) ein Maximum wird (z.B. nach IEEE International Conference on Communications - ICC'90, Atlanta, Ramseier S. "Bandwidth-Efficient Trellis Coded Modulation Schemes" S. 1517-1521). Diese Modulationsoptimierung bei Mono-Trägern wurde bisher nicht bei Multiträger-Verfahren angewendet, hierfür wurden allenfalls die eingangs erwähnten bekannten höherwertigen Modulationsverfahren wie 16QAM oder 64QAM für praktisch anwendbar angesehen, bei denen die Modulationspunkte nach Art eines quadratischen Gittermusters angeordnet werden, das empfängerseitig auf einfache Weise durch eine Größer/Kleiner-Entscheidung demoduliert werden kann.

Es ist Aufgabe der Erfindung, ein Multiträger-Übertragungsverfahren der eingangs erwähnten Art bezüglich der aufgezeigten Nachteile zu verbessern.

Diese Aufgabe wird gelöst durch die Kombination laut Patentanspruch.

Bei der erfindungsgemäßen Kombination wird für jeden einzelnen Träger eines Multiträger-Übertragungsverfahrens die Lage der Amplituden- und Phasenzustände so gewählt, daß es bezüglich ausgewählter Modulationskriterien optimal wird. So kann beispielsweise die Modulation jedes einzelnen Trägers bezüglich Senderleistung (Power Optimized Modulation, POM) oder bezüglich der Größe und Zuordnung der Entscheidungskreise der einzelnen Phasenzustände (Circle Optimized Modulation, COM) optimiert werden. Damit kann den eingangs geschilderten Nachteilen der bekannten Multiträger-Übertragungsverfahren entgegengewirkt werden, überdimensionierte Senderverstärker werden vermieden, da die erzeugten Signale bei der erfindungsgemäßen Kombination nicht nur eine geringere effektive d.h. thermische Leistung aufweisen, sondern überraschenderweise auch einen geringeren Crestfaktor. Auch die Intermodulationsprodukte und Inbandstörungen werden verringert, ohne daß die Komplexität des Senders bzw. der Empfänger vergrößert wird. Die Realisierung der POM-bzw. COM-Multiträger erfolgt senderseitig durch eine entsprechende Software eines Prozessors und damit ohne Erhöhung der Herstellungskosten des Senders gegenüber einem bekannten Multiträger-Verfahren mit höherwertiger Modulation (z.B. mit QAM), im Empfänger ist eine Demodulation auf einfache Weise nur durch entsprechende Optimierung des verwendeten Decodieralgorithmus möglich, also ebenfalls ohne nennenswerte Erhöhung der Komplexität des Empfängers.

Die Erfindung wird im folgenden anhand schematischer Zeichnungen an Ausführungsbeispielen näher erläutert.

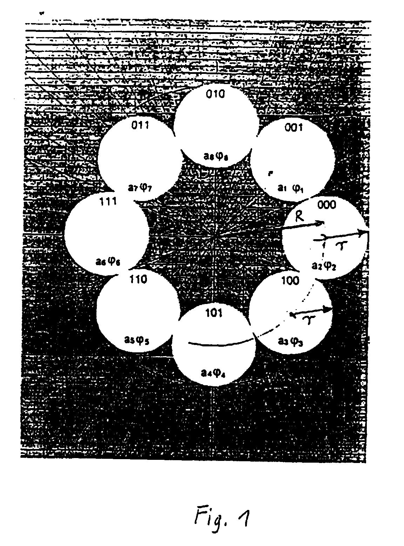

Fig. 1 zeigt eine übliche 8PSK-Modulation, bei der die einzelnen jeweils mit gleicher Amplitude A1 bis A8 umgetasteten unterschiedlichen Phasenzustände φ₁-φ₈ auf einen Kreis symmetrisch zum Mittelpunkt des Vektordiagramms angeordnet sind. Die jedem einzelnen Phasenzustand zugeordneten Entscheidungskreise, innerhalb welcher eine eindeutige Zustandserkennung gewährleistet ist, sind unmittelbar aneinander anschließend und sich berührend ausgebildet.

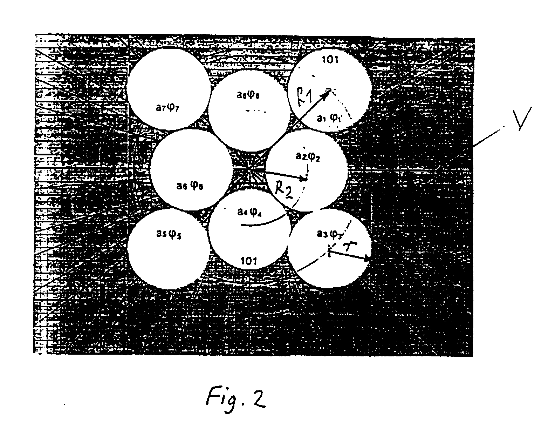

Fig. 2 zeigt eine bezüglich Senderleistung optimierte Anordnung der Amplituden- und Phasenzustände a₁, φ₁ bis a₈, φ₈ einer 8PSK Modulation gemäß Fig. 1. Nach Fig. 2 sind die einzelnen Entscheidungskreise r der einzelnen Amplituden- und Phasenzustände nicht mehr kranzförmig gemäß Fig. 1 angeordnet, sondern im Vektordiagramm V so ineinander verschachtelt, daß nur noch vier Amplituden- und Phasenzustände auf einem äußeren Kreis R1 liegen, während vier der Amplituden- und Phasenzustände so nach innen in Richtung auf den Mittelpunkt des Vektordiagramms verschoben sind, daß sie auf einem kleineren Kreis R2 liegen. Fig. 2 zeigt außerdem, daß die Größe der Entscheidungskreise gegenüber Fig. 1 gleich sind und diese Entscheidungskreise sich wieder unmittelbar berühren. Eine solche als 8POM (Power Optimized Modulation) bezeichnete Modulationsart nach Fig. 2 besitzt den Vorteil, daß die mittlere Sendeleistung um ca. 2,0 dB (37 %) reduziert ist unter Beibehaltung der Entscheidungskreise (Übertragungssicherheit).

Die Leistungsreduktion kann auch als Modulationsgewinn betrachtet werden und sich in anderen Vorteilen wie größere Versorgungsfläche, geringere Bitfehlerrate oder geringere Dimension der Empfangsantenne ausdrücken.

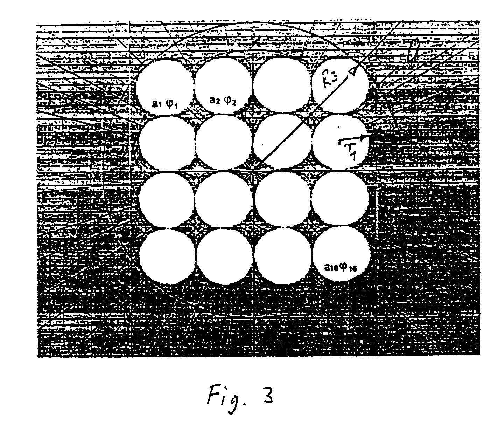

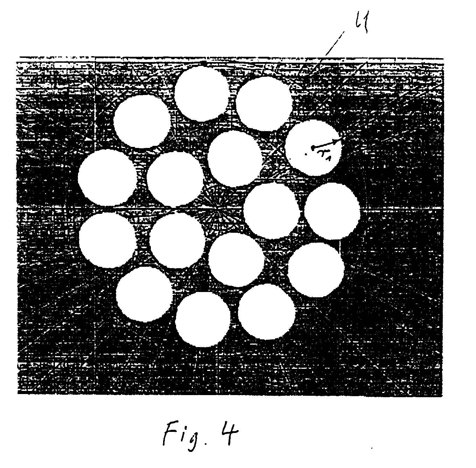

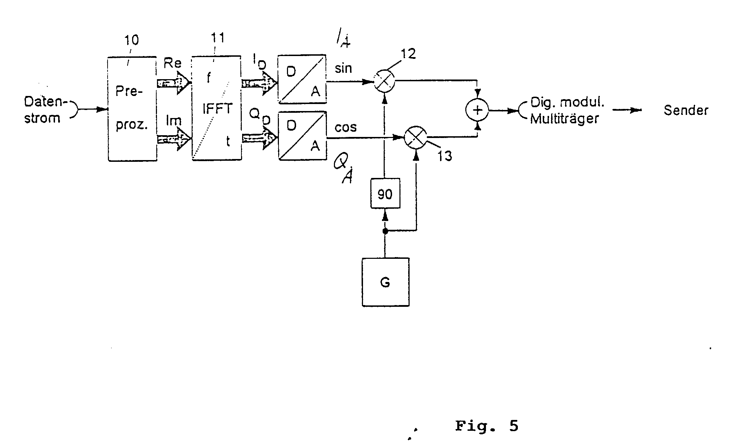

Fig. 3 zeigt ein übliches 16QAM-Modulationsverfahren mit 16 in Reihen und Zeilen nebeneinander angeordneten Amplituden- und Phasenzuständen a₁, φ₁ bis a₁₆,ϕ₁₆, denen jeweils gleich große Entscheidungskreise r₁ zugeordnet sind. Gemäß Fig. 4 können diese Amplituden- und Phasenzustände mit zugehörigen gleich großen Entscheidungskreisen so innerhalb des umfassenden Kreises U mit Radius R₃ verteilt werden, daß sich die aus Fig. 3 übernommenen Entscheidungskreise nicht mehr berühren. Damit ergeben sich die tatsächlichen, sich berührenden Entscheidungskreise größer, also ist das Modulationsverfahren bezüglich eindeutiger Zustandserkennung optimiert (16 COM = Circle Optimized Modulation). Die Fläche jedes einzelnen Entscheidungskreises für die jeweiligen Amplituden- und Phasenzustände kann auf diese Weise um ca. 35 % vergrößert werden und zwar unter Beibehaltung der gemäß Fig. 3 vorgegebenen Spitzenaussteuerung (Spitzenleistung). Fig. 5 zeigt eine andere Möglichkeit zur Optimierung des ursprünglichen 16 QAM-Verfahrens nach Fig. 3 und zwar wird hier unter Beibehaltung der Größe der Entscheidungskreise wieder bezüglich Leistung optimiert, durch die in Fig. 5 dargestellte Anordnung der Entscheidungskreise kann die mittlere Leistung um ca. 0,47 dB (10 %) verringert werden.

Diese an sich bekannte Modulationsoptimierung gemäß Fig. 1 bis 4 wird gemäß der Erfindung für jeden einzelnen Träger eines bekannten Multiträger-Übertragungsverfahrens benutzt, bei dem eine Vielzahl von einzelnen nebeneinanderliegenden Trägern vorgesehen ist. Jeder Träger wird also nach diesem an sich für Mono-Träger-Übertragungsverfahren bekannten Modulationsverfahren moduliert. Hierfür eignen sich vor allem die mittlerweile angebotenen Digitaltechniken mit Mikrokontroller und digitalen Signalprozessoren, wie sie beispielsweise beschrieben sind in SHARP " An Ultra-High Speed DSP Chip Set For Real-Time Applications", M.E. Fleming, Sharp Electronics GmbH, Hamburg. Fig. 5 zeigt den Prinzipaufbau eines solchen digital arbeitenden Modulators unter Benutzung einer IFFT (Inverse Fast Fourier Transformation).

Der auf die Träger des Multiträgerpaketes aufzumodulierende serielle Datenstrom wird in einem Prozessor 10 aufbereitet und zwar so, daß entsprechend der Wetigkeit der Modulation (z. B. 8POM nach Fig. 2) die hier abgespeicherten komplexen Amplituden- und Phasenzustände (z.B. a1, ϕ₁ bis a₈, ϕ₈) nach Realteil und Imaginärteil adressiert und dann einem FET-Prozessor 11 für die IFFT zugeführt werden. In diesem Prozessor 11 wird dann entlang der Schrittlänge, d. h. die Zeit, in der die Modulationspunkte aller Träger des Multiträgerpaketes konstant sind, die IFFT durchgeführt und liefert in der Zeitebene die Abtastwerte in äquidistanten Schritten nach den Gesetzen der Fourier-Transformation. Die so erzeugten digitalen I- und Q-Werte werden anschließend über Digital/Analog-Wandler in entsprechende analoge Signale I_{A} bzw. Q_{A} umgewandelt und dann einem üblichen IQ-Modulator, aufgebaut aus zwei Zweiseitenbandmodulatoren 12 und 13 mit jeweils gegeneinander um 90° phasenversetzten Trägern in das Modulationssignal umgesetzt, das dann unmittelbar dem Sender zugeführt wird.

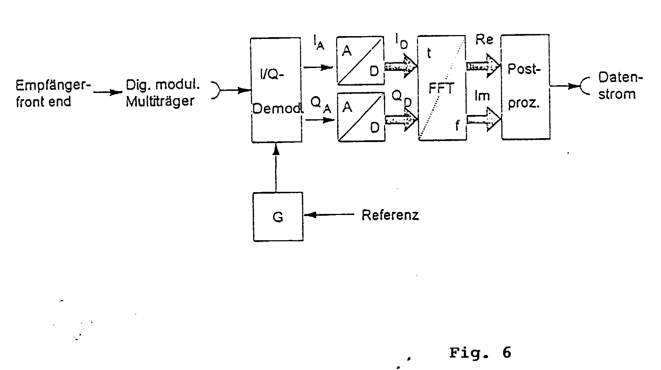

Fig. 6 zeigt den zugehörigen Demodulator im Empfänger. Das empfangene Hochfrequenzsignal wird in einem IQ-Demodulator mittels eines referenzgesteuerten Generators umgesetzt in die Signale I_{A} und Q_{A}. Die Frequenz- und die Phasenreferenz für den referenzgesteuerten Generator ist im Modulationssignal zeitdiskret enthalten (Referenzsymbol) oder wird aus dem Modulationssignal über eine Mittelung gewonnen. Die Signale I_{A} und Q_{A} werden nach A/D-Wandlung wieder einem FFT-Prozessor zugeführt, der FFT-Algorithmus ergibt die komplexen Amplituden- und Phasenzustände, bei einem Mültiträger-Übertragungsverfahren also die komplexen Zustände jedes Einzelträgers mit äquidistanter Frequenz. Aus diesen rückgewonnenen Amplituden- und Phasenzuständen wird über einen nachfolgenden Prozessor wieder der ursprüngliche digitale Datenstrom rückgewonnen der dann im Empfänger weiter aufbereitet wird.

## Patentansprüche

1. Verfahren zum Übertragen von digitalen Daten über eine Vielzahl von nebeneinanderliegenden getrennten Hochfrequenzträgern (Multiträger-Übertragungsverfahren), bei dem jeder einzelne Träger mit den zu übertragenden Daten nach einem höherwertigen Modulationsverfahren mit kombinierter Umtastung zwischen Amplituden- und/oder Phasenzuständen moduliert ist, derart, daß die den einzelnen Amplituden- und Phasenzuständen im Vektordiagramm zugeordneten Entscheidungskreise für eindeutige Zustandserkennung sich nicht überlappen, dadurch **gekennzeichnet,** daß für jeden einzelnen Träger die Lage der Amplituden- und Phasenzustände im Vektordiagramm nach ausgewählten Optimierungskriterien der Modulation frei gewählt ist.

## Claims

1. System for the transmission of digital data via a large number of discrete radio-frequency carriers situated alongside one another (multi-carrier transmission system), in which each individual carrier is modulated with the data to be transmitted using a higher-order modulation process with combined keying between amplitude states and/or phase states, in such a manner that the decision circles for unambiguous status recognition which are assigned to the individual amplitude and phase states in the vector diagram do not overlap,
characterised in that for each individual carrier the position of the amplitude and phase states in the vector diagram is freely chosen according to selected modulation optimisation criteria.

## Revendications

1. Procédé de transmission de données numériques par un grand nombre de porteuses haute fréquence séparées, juxtaposées (procédé de transmission à porteuse multiple), selon lequel, à chaque porteuse, avec les données à transmettre selon un procédé de modulation très précis, on module avec une détection combinée entre les états d'amplitude et/ou de phase de façon que les différents états d'amplitude et de phase des cercles de décision associés dans le diagramme vectoriel, ne se chevauchent pas pour permettre une détection d'état non équivoque,
caractérisé en ce que
pour chaque porteuse séparée, on sélectionne librement la position des états d'amplitude et de phase dans le diagramme vectoriel, selon des critères d'optimisation sélectionnés de la modulation.
